# EUROPÄISCHE PATENTSCHRIFT

(11) **EP 2 978 343 B1**
(45) Veröffentlichungstag und Bekanntmachung des Hinweises auf die Patenterteilung: **10.05.2017**
(21) Anmeldenummer: 14713439.9
(22) Anmeldetag: 25.03.2014
(51) Int. Cl.: A47B 96/20, G06K 19/077

(54) **MÖBELPLATTE MIT IN DER FLÄCHE ANGEBRACHTER KENNZEICHNUNG**
FURNITURE PANEL HAVING A MARKING AFFIXED IN THE FACE
PANNEAU DE MEUBLE MUNI D'UN IDENTIFIANT APPLIQUÉ DANS LA SURFACE

(30) Priorität: 25.03.2013 DE 202013101252 U
(43) Veröffentlichungstag der Anmeldung: 03.02.2016
(73) Patentinhaber: halco GmbH, 48653 Coesfeld (DE)
(72) Erfinder: HÜLS, Ludwig, 48653 Coesfeld (DE); NITSCHE, Franz, 48739 Legden (DE)
(74) Vertreter: Habbel, Ludwig
(86) Internationale Anmeldenummer: PCT/EP2014/055995
(87) Internationale Veröffentlichungsnummer: WO 2014/154714

(56) Entgegenhaltungen:
- EP-A1- 2 112 617
- EP-A1- 2 230 626
- EP-A2- 2 461 276

## Beschreibung

Die Erfindung betrifft eine Möbelplatte nach dem Oberbegriff des Anspruchs 1.

Aus der EP 2 230 626 A1, die als nächstkommender Stand der Technik angesehen wird ist eine solche Möbelplatte bekannt.

Aus der Praxis sind zudem derartige Möbelplatten in vielen unterschiedlichen Ausgestaltungen bekannt. Beispielsweise kann es sich um eine Holzwerkstoffplatte handeln, die ringsum lackiert ist, so dass beispielsweise die beiden großflächigen Oberflächen sowie die ringsum verlaufenden Schmalseiten, also die Schmalseiten der Möbelplatte, lackiert sind. Andere Möbelplatten sind mehrschichtig aufgebaut und weisen außer einer Kernplatte auf wenigstens einer der beiden Oberflächen dieses Kerns weitere Schichten auf, beispielsweise in Form einer Furnierschicht, einer Oberflächenfolierung o. dgl. Gegebenenfalls können zwei Furnierschichten mit einem um 90° zueinander versetzten Faserverlauf vorgesehen sein und ggf. kann, wenn bei der Möbelplatte zwischen einer dem Benutzer zugewandten Sichtfläche und einer vom Benutzer abgewandten Rückseite der Möbelplatte unterschieden wird, die Sichtseite der Möbelplatte anders, insbesondere ästhetisch hochwertiger, ausgestaltet sein als die Rückseite der Möbelplatte.

In der Praxis wird eine Vielzahl unterschiedlicher Möbelplatten hergestellt, sowohl was die Abmessungen angeht als auch was die Oberflächenausgestaltungen angeht. Zudem können sich zwei zunächst identische Möbelplatten durch eine weitere Bearbeitung voneinander unterscheiden: Beispielsweise können zwei Möbelplatten, welche die gleichen Abmessungen und die gleichen Oberflächenbearbeitung hinsichtlich Furnierung, Folierung oder Lackierung und dabei auch denselben Farbton bzw. dieselbe Holzart in der Oberflächengestaltung aufweisen, dadurch unterscheiden, dass beispielsweise Beschlagelemente an unterschiedlichen Stellen der Möbelplatte angeordnet werden, beispielsweise in Abhängigkeit davon, ob eine Möbelplatte als rechts oder als links angeschlagene Tür dienen soll, so dass dementsprechend Türgriffe, Scharnierelemente u. dgl. an im Übrigen gleich ausgestalteten Möbelplatten an unterschiedlichen Stellen montiert werden.

In der erwähnten EP 2 230 626 A1 wird vorgeschlagen, einen RFID-Tag an einer Kante in die Möbelplatte einzubringen. Hierzu wird zunächst eine Ausnehmung in die Kante eingebracht, welche anschließend den RFID-Tag aufnimmt. Außen wird eine zusätzliche Schicht - wie ein an sich bekannter Kantenumleimer - angebracht, welche den RFID-Tag und die Ausnehmung abdeckt.

Auch in der EP 2 461 276 A2 wird vorgeschlagen, ein plattenförmiges Erzeugnis mit einem elektronischen Bauteil, welches eine individualisierende Kennzeichnung aufweist, im Bereich einer Schmalseite des plattenförmigen Erzeugnisses zu bestücken.

Aus der EP 2 112 617 A1 ist es bekannt, ein Werkstück aus wenigstens zwei miteinander verleimten und verpressten Lamellen herzustellen, wobei sich ein so genannter Transponder zwischen den beiden Lamellen befindet. Dabei sind keine besonderen Aufnahmen für den Transponder am Werkstück vorzusehen.

Der Erfindung liegt die Aufgabe zugrunde, eine gattungsgemäße Möbelplatte dahingehend zu verbessern, dass deren RFID-Tag in einer alternativen Position in der Möbelplatte montiert wird und deren Handhabung in einem logistischen Ablauf vereinfacht werden kann.

Diese Aufgabe wird durch eine Möbelplatte mit den Merkmalen des Anspruchs 1 gelöst.

Die Erfindung schlägt mit anderen Worten vor, in der Plattenfläche ein Funkelement anzuordnen, welches selbst keinen Energiespeicher benötigt, sondern welches, von außen angeregt, eine Kennung ausstrahlt, die zur eindeutigen Identifizierung der betreffenden Möbelplatte dient. Dabei ist vorgesehen, dieses als RFID-Tag Funkelement von den umlaufenden Schmalseiten der Möbelplatte beabstandet anzuordnen, so dass bei der Produktion der Möbelplatte sichergestellt ist, einen ausreichenden Abstand von den Stellen einzuhalten, an denen beispielsweise Beschlagelemente in die Möbelplatte eingebracht werden können, wie beispielsweise Scharniere, Griffe u. dgl. Auch können an den umlaufenden Schmalseiten oder in deren unmittelbarer Nähe beispielsweise Beschlagelemente vorgesehen sein, die als Schiebeführung, z. B. bei einem Schubladenauszug, vorgesehen sind. Um Beschädigungen des RFID-Tags auszuschließen, ist vorschlagsgemäß die Anordnung eines RFID-Tags im Abstand von den umlaufenden Schmalseiten der Möbelplatte vorgesehen. Weiterhin ist vorgesehen, dass, obwohl der RFID-Tag in die Möbelplatte bzw. in die zunächst hergestellte Bohrung eingebracht worden ist, die Oberfläche der Möbelplatte unterbrechungsfrei über die Bohrung verläuft, so dass der RFID-Tag für den Benutzer unsichtbar in die Möbelplatte integriert ist. Beispielsweise kann der RFID-Tag in eine so flache Bohrung eingebracht sein, dass die Oberfläche des RFID-Tags mit der umgebenden Oberfläche der Möbelplatte bündig abschließt, so dass anschließend die Möbelplatte lackiert werden kann und eine unterbrechungsfreie, geschlossene Oberfläche der fertig gestellten Möbelplatte resultiert. Während die Möbelplatte eine Bohrung aufweist, ist die Oberfläche der Möbelplatte also geschlossen, nämlich unterbrechungsfrei, so dass auf diese Weise die gewünschte, für den Betrachter unsichtbare Anordnung des RFID-Tags gewährleistet ist.

Die unterbrechungsfreie Ausgestaltung der die Bohrung aufweisenden Oberfläche dient nicht nur dazu, aus ästhetischen Gründen den RFID-Tag möglichst unsichtbar anbringen zu können. Wenn beispielsweise eine bewusst technische Anmutung der Möbelplatte erzielt werden soll und beispielsweise die Oberfläche lediglich mit einer Klarlack-Schicht versehen ist, so ist das RFID-Tag zwar sichtbar, jedoch wird ein Schutz bewirkt, der den RFID-Tag gegen Feuchtigkeit und gegen ein versehentliches Ablösen aus der Möbelplatte sichert.

Vorteilhaft kann vorgesehen sein, dass die Bohrung nicht als Durchgangsbohrung die Möbelplatte vollständig durchsetzt, sondern dass sie vielmehr als Sackloch ausgestaltet ist, welches sich nur über einen Teil der Materialstärke der Möbelplatte erstreckt. Auf diese Weise wird die Herstellung der Möbelplatte wirtschaftlich vorteilhaft beeinflusst, da nur auf einer der beiden Oberflächen eine entsprechende Nachbehandlung der Möbelplatte erforderlich ist. Zudem ist vorteilhaft, dass in diesem Zusammenhang die Bohrung eine im Wesentlichen senkrecht zu den Oberflächen verlaufende Mittelachse aufweist, also nicht etwa schräg in die Möbelplatte eingebracht ist, sondern senkrecht zur Ebene der Möbelplatte. Auf diese Weise wird einerseits die Herstellung der Bohrung vereinfacht und auf der anderen Seite sowohl das Einbringen des RFID-Tags vereinfacht, welches mit einer kreisrunden Außenkontur passgenau in die Bohrung eingesetzt werden kann, so dass es klappersicher in der Bohrung fixiert ist. Zudem kann vorteilhaft vorgesehen sein, dass das RFID-Tag mittels Klebstoff in der Bohrung fixiert ist, um Klappergeräusche o. dgl. zuverlässig auszuschließen.Erfindungsgemäß wird das RFID-Tag innerhalb der Bohrung angeordnet und durch ein Füllstück abgedeckt. Das Füllstück ist in der Bohrung angeordnet und ermöglicht einerseits eine klappersichere Fixierung des RFID-Tags in der Bohrung und zum anderen kann das Füllstück, je nach dem aus welchem Werkstoff es besteht, eine Oberfläche aufweisen, die an die die Bohrung umgebende Oberfläche der übrigen Möbelplatte derart angepasst ist, dass eine möglichst unterbrechungsfreie, gleichartige Oberflächenbearbeitung der gesamten betreffenden Oberfläche der Möbelplatte ermöglicht wird, so dass beispielsweise bei einer Lackierung dieser Oberfläche die Bohrung und das darin befindliche Füllstück möglichst nicht sichtbar werden.

Vorteilhaft kann die Möbelplatte wenigstens zweischichtig aufgebaut sein. Einer dieser beiden Schichten kann beispielsweise als Kern bezeichnet sein, der die Bohrung aufweist. Die andere Schicht kann als Deckschicht bezeichnet werden. Diese Deckschicht deckt die Bohrung ab und erstreckt sich, anders als das erwähnte Füllstück, über die Mündung der Bohrung hinaus. Beispielsweise kann diese Deckschicht dann lackiert werden, so dass auch unter wechselnden Witterungsbedingungen, wenn der Holzwerkstoff, aus dem die Möbelplatte ggf. besteht, schwindet oder sich dehnt, keine Risse in der sichtbaren Oberfläche der Möbelplatte auftreten, sondern vielmehr die betreffende Oberfläche der Möbelplatte durch die geschlossene Deckschicht gebildet wird, die ihrerseits lackiert sein kann, so dass im Lack keine die Bohrung kennzeichnenden Risse auftreten. Dabei kann insbesondere vorteilhaft vorgesehen sein, dass sich die Deckschicht über die kompletten Abmessungen der Möbelplatte erstreckt, also allseitig bis an die umlaufenden Schmalseiten der Möbelplatte ragt und nicht nur vergleichsweise kleinformatig um die Bohrung herum reicht.

Beispielsweise kann vorteilhaft vorgesehen sein, dass die Deckschicht als Furnier oder als Folie ausgestaltet ist, derart, dass die Deckschicht die gleiche Oberflächenbeschaffenheit aufweist, wie andere Möbelplatten desselben Möbels, so dass eine möglichst wirtschaftliche Fertigung der Möbelplatte dadurch unterstützt wird, dass die Oberfläche der Möbelplatte, hinter der die Bohrung und das RFID-Tag vorgesehen sind, auf dieselbe Weise bearbeitet bzw. erzeugt wird, wie beispielsweise auch die gegenüberliegende Oberfläche derselben Möbelplatte, oder wie weitere Möbelplatten desselben Möbels, so dass diesbezüglich der Verfahrensablauf für die Herstellung von Möbelplatten möglichst wenig beeinträchtigt und komplizierter ausgestaltet wird.

Vorteilhaft kann die Bohrung mittels eines so genannten Topfbohrers hergestellt werden, wie er in der Möbelindustrie üblich ist und zur Herstellung von Möbeln verwendet wird, wenn beispielsweise Scharnierbeschläge eingesetzt werden sollen. Daher kann die Bohrung vorteilhaft denselben Durchmesser aufweisen wie eine zur Montage eines Scharnierbeschlags erforderliche Bohrung. Wenn beispielsweise CNC-gesteuerte Werkzeuge verwendet werden, kann dasselbe Werkzeug verwendet werden, um in eine Möbelplatte sowohl die Bohrungen für eine Scharniermontage einzubringen als auch die Bohrung zur Aufnahme des RFID-Tags, so dass mit minimaler zeitlicher Verzögerung, ohne die Erfordernis einer eigenen Bearbeitungsstation oder ohne die Erfordernis eines Werkzeugwechsels, die gewünschte Bohrung zur Aufnahme des RFID-Tags in die Möbelplatte eingebracht werden kann.

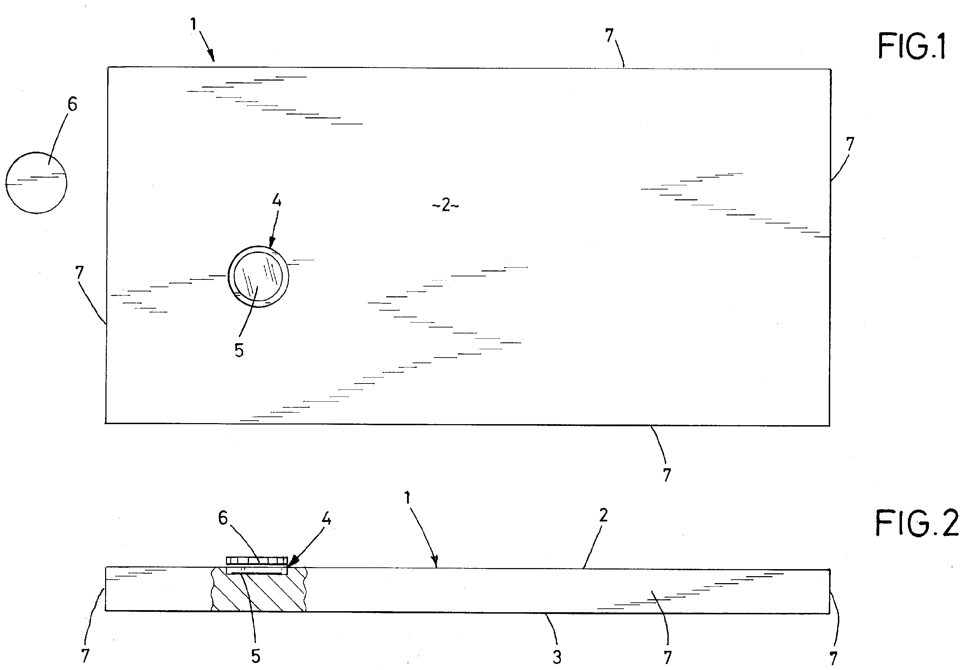

Ein Ausführungsbeispiel der Erfindung wird anhand der rein schematischen Darstellungen nachfolgend näher erläutert. Dabei zeigt
- Fig. 1: eine Draufsicht auf die zur Herstellung einer Möbelplatte vorgesehenen Komponenten, und
- Fig. 2: eine Seitenansicht auf die Möbelplatte von Fig. 1, wobei die einzelnen vorgesehenen Komponenten jedoch in einer anderen Anordnung zueinander dargestellt sind.

In den Zeichnungen ist mit 1 insgesamt eine Möbelplatte bezeichnet, die insgesamt rechteckig ausgestaltet ist. Die Möbelplatte 1 weist zwei Oberflächen 2 und 3 auf, wobei in die obere der beiden Oberflächen, nämlich in die Oberfläche 2, eine Bohrung 4 eingebracht ist, die als so genanntes Sackloch oder als Topfbohrung ausgestaltet ist, also die Möbelplatte nicht vollständig durchsetzt, so dass die gegenüberliegende Oberfläche 3 nicht etwa die gegenüberliegende Mündung der Bohrung 4 aufweist.

In die Bohrung 4 ist ein als RFID-Tag 5 bezeichnetes Funkelement eingesetzt, welches eine eindeutige Kennung aufweist und somit die Möbelplatte 1 eindeutig kennzeichnet. Mittels dieser eindeutigen Kennzeichnung kann einerseits die Möbelplatte 1 vollautomatisch weiter bearbeitet werden, beispielsweise betreffend die Oberflächenbearbeitung durch Aufbringen einer Folie, eines Furniers oder einer Lackierung, oder betreffend das Anbringen von Beschlägen an der Möbelplatte 1, z. B. Scharniere, Griffe, umlaufende Dichtungselemente, Führungsschienen oder dergleichen.

Die eindeutige Identifizierbarkeit der Möbelplatte 1 erleichtert jedoch nicht nur während der Möbelherstellung einen automatisierten Herstellungsablauf, sondern auch den späteren Aufbau eines teilzerlegten Möbels. Insbesondere, wenn das Möbel eine individuelle Sonderanfertigung darstellt, kann das Montagepersonal mit entsprechenden Lesegeräten jede Möbelplatte 1 des aufzubauenden Möbels eindeutig identifizieren, so dass dadurch Montagefehler vermieden und die Montagezeit optimal kurz gehalten werden kann.

Noch später, wenn es während der Lebensdauer des Möbels beispielsweise zu Beschädigungen des Möbels oder zu Reklamationen kommen sollte, kann eine Nachbestellung der gewünschten Möbelplatte 1 mit höchster Genauigkeit erfolgen, sowohl was die Oberflächenausgestaltung der Möbelplatte angeht, beispielsweise den korrekten Farbton einer Lackierung, die gewünschte Holzart und Maserung eines Furniers, oder auch die korrekte Art und Anbringung der einzelnen an der Möbelplatte vorgesehenen Beschlagelemente. Übertragungsfehler, wie sie bei einer mündlichen oder schriftlichen Beschreibung eines nachzufertigenden Möbelelements nicht auszuschließen sind, werden vermieden. Vielmehr können die gewünschten Detailinformationen zu der nachzufertigenden Möbelplatte aus einer Datenbank des Möbelherstellers unmittelbar aufgerufen werden, so dass ein exakter Ersatz in sehr kurzer Zeit und mit einem für eine Nachbestellung vergleichsweise geringen Bearbeitungsaufwand hergestellt werden kann.

Das RFID-Tag 5 wird in der Bohrung 4 angebracht, und zwar bei dem dargestellten Ausführungsbeispiel in die Tiefe der Bohrung 4 versenkt. Ein darüber befindlicher Freiraum innerhalb der Bohrung 4 wird anschließend mit Hilfe eines Füllstücks 6 ausgefüllt. Dabei sind die Abmessungen des RFID-Tags 5 und des Füllstücks 6 so aufeinander und auf die Tiefe der Bohrung 4 abgestimmt, dass die Bohrung 4 vollständig ausgefüllt ist und sich die Oberfläche des Füllstücks 6 niveaugleich in derselben Ebene befindet wie die Oberfläche 2, welche die Bohrung 4 umgibt. Diese durchgehende Ebene kann beispielsweise lackiert oder mit einer anderen Oberflächenbeschichtung versehen werden.

Das RFID-Tag 5 und / oder das Füllstück 6 können vorteilhaft durch Klebstoff in der Möbelplatte 1 fixiert werden. Insbesondere bei Verwendung eines elastischen Klebstoffs kann eine Rissbildung zwischen dem Füllstück 6 und der umgebenden Oberfläche 2 verhindert werden, auch wenn die verwendeten Werkstoffe witterungsbedingt "arbeiten", so dass gegebenenfalls die Möbelfläche, die durch das Füllstück 6 und die umgebende Oberfläche 2 geschaffen wird, direkt lackiert werden kann.

Alternativ zu einer direkten Lackierung kann auf die Oberfläche 2 noch eine Deckschicht aufgebracht werden, die sich vorteilhaft über die gesamte Oberfläche 2 ringsum bis an die Schmalseiten 7 der Möbelplatte 1 erstreckt, so dass auf dieser Seite der Möbelplatte 1 eine Oberfläche 2 geschaffen wird, die genauso geschlossen und unterbrechungsfrei ist wie die gegenüberliegende Oberfläche 3. Diese geschlossene, auch die Bohrung 4 verschließende Deckschicht schafft eine Oberfläche der Möbelplatte, welche anschließend lackiert werden kann ohne die Gefahr, dass der Lack später um die Mündung der Bohrung 4 herum reißt.

Die erwähnte Deckschicht kann beispielsweise als Furnier ausgestaltet sein oder als Folie, so dass - gegebenenfalls auch ohne eine zusätzliche Lackierung - hier eine so genante Sichtfläche der Möbelplatte 1 geschaffen werden kann, welche die gleiche Oberflächenbeschaffenheit aufweist wie andere Sichtflächen desselben Möbels.

Gegebenenfalls kann eine der beiden Oberflächen 2 und 3 der Möbelplatte 1 als Rückseite ausgestaltet sein, die zu der gegenüberliegenden, als Sichtfläche bezeichneten Oberflächen 3 bzw. 2 optisch unterschiedlich und wirtschaftlich preisgünstiger beschaffen ist. In diesem Fall kann z. B. eine Lackierung der unterbrechungsfreien Oberfläche 3 vorgesehen sein, während auf der Oberfläche 2 das Füllstück 6 sichtbar bleiben kann. Falls jedoch ohnehin eine Deckschicht auf der Sichtseite vorgesehen ist, beispielsweise eine Furnier- oder Folienschicht, kann diese auf der Oberfläche 2 vorgesehen werden, um das Füllstück 6 zu verdecken.

Die in den Zeichnungen dargestellte Möbelplatte 1 kann den Kern einer insgesamt mehrschichtigen Möbelplatte bilden, bei welcher sowohl auf der die Bohrung 4 aufweisenden Oberfläche 2 als auch auf der gegenüberliegenden Oberfläche 3 eine zusätzliche Deckschicht vorgesehen ist. Beispielsweise kann die Möbelplatte 1 aus einem Holzwerkstoff bestehen, als so genannte MDF-Platte, deren beiden Oberflächen 2 und 3 sowie die umlaufenden Schmalseiten 7 mit einer Furnier- oder Folienschicht versehen werden.

## Patentansprüche

1. Möbelplatte (1),
mit zwei großflächigen Oberflächen (2, 3) und umlaufenden Schmalseiten (7) wobei die Möbelplatte (1) eine von den Schmalseiten (7) beabstandete Bohrung (4) aufweist,
und in der Bohrung (4) ein RFID-Tag (5) angeordnet ist, wobei die mit der Bohrung (4) versehene Oberfläche (2) geschlossen ausgestaltet ist, **dadurch gekennzeichnet, dass** ein Füllstück (6) das RFID-Tag (5) verdeckend in der Bohrung (4) angeordenet ist.

2. Möbelplatte nach Anspruch 1,
**dadurch gekennzeichnet,**
**dass** die Bohrung (4) eine im wesentlichen senkrecht zu den Oberflächen (2, 3) verlaufende Mittelachse aufweist, und als Sackloch ausgestaltet ist, welches sich nur über einen Teil der Materialstärke der Möbelplatte (1) erstreckt.

3. Möbelplatte nach einem der vorhergehenden Ansprüche, **dadurch gekennzeichnet,**
**dass** die Möbelplatte (1) wenigstens zweischichtig aufgebaut ist und die Bohrung (4) durch eine dieser beiden Schichten, die als Deckschicht bezeichnet ist, abgedeckt ist, wobei sich die Deckschicht über die Mündung der Bohrung (4) hinaus erstreckt.

4. Möbelplatte nach Anspruch 3,
**dadurch gekennzeichnet,**
**dass** die Deckschicht als Furnier oder als Folie ausgestaltet ist.

5. Möbelplatte nach einem der vorhergehenden Ansprüche, **dadurch gekennzeichnet,**
**dass** die Bohrung (4) denselben Durchmesser aufweist wie eine zur Montage eines Scharnierbeschlags erforderliche Bohrung, derart, dass die Bohrung (4) mittels eines zur Möbelherstellung handelsüblichen Topfbohrers herstellbar ist.

6. Möbelplatte nach einem der vorhergehenden Ansprüche, **dadurch gekennzeichnet,**
**dass** das RFID-Tag (5) und / oder das Füllstück (6) mittels Klebstoff in der Bohrung (4) fixiert ist.

## Claims

1. Furniture panel (1), with two large-surface faces (2, 3) and circumferential narrow sides (7), where the furniture panel (1) has a bore (4) at a distance from the narrow sides (7) and an RFID tag (5) is arranged in the bore, where the face (2) with the bore (4) is unbroken in form, **characterised in that** a filling piece (6) is arranged in the bore (4) covering the RFID tag (5).

2. Furniture panel in accordance with claim 1, **characterised in that** the bore (4) has a central axis which is substantially vertical to the faces (2, 3) and is formed as a blind hole which extends through only part of the material thickness of the furniture panel (1).

3. Furniture panel in accordance with either of the preceding claims, **characterised in that** the furniture panel (1) consists of at least two layers and the bore (4) is covered by one of these two layers which is referred to as the outer layer, where the outer layer extends beyond the mouth of the bore (4).

4. Furniture panel in accordance with claim 3, **characterised in that** the outer layer is formed as veneer or foil.

5. Furniture panel in accordance with any of the preceding claims, **characterised in that** the bore (4) has the same diameter as a bore required for fitting a hinge unit, so that the bore (4) can be made with the standard type of forstner drill used in the manufacture of furniture.

6. Furniture panel in accordance with any of the preceding claims, **characterised in that** the RFID tag (5) and/or the filling piece (6) is fixed in the bore (4) by means of adhesive.

## Revendications

1. Panneau de meuble (1) comprenant deux grandes surfaces (2, 3) et des tranches (7) périmétriques, sachant que le panneau de meuble (1) présente un alésage (4) situé à distance des tranches (7) et que dans l'alésage (4) est disposé une balise RFID (5), sachant que la surface (2) dotée de l'alésage (4) est configurée obturée, **caractérisé en ce qu'**une pièce de comblement (6) est agencée dans l'alésage (4) et recouvre la balise RFID (5).

2. Panneau de meuble selon la revendication 1, **caractérisé en ce que** l'alésage (4) présente un axe médian au tracé essentiellement perpendiculaire aux surfaces (2, 3), et qu'il est configuré en trou borgne qui ne s'étend que sur une partie de l'épaisseur du matériau du panneau de meuble (1).

3. Panneau de meuble selon l'une des revendications précédentes, **caractérisé en ce que** la structure du panneau de meuble (1) se compose d'au moins deux couches et que l'alésage (4) est recouvert par l'une de ces deux couches appelée « couche de couverture », sachant que la couche de couverture s'étend au-delà de l'orifice de l'alésage (4).

4. Panneau de meuble selon la revendication 3, **caractérisé en ce que** la couche de couverture est configurée comme un placage ou comme une feuille.

5. Panneau de meuble selon l'une des revendications précédentes, **caractérisé en ce que** l'alésage (4) présente le même diamètre qu'un alésage nécessaire au montage d'une ferrure de charnière, de sorte que l'alésage (4) est réalisable au moyen d'une mèche Forstner du commerce destinée à la fabrication de meubles.

6. Panneau de meuble selon l'une des revendications précédentes, **caractérisé en ce que** la balise RFID (5) et/ou la pièce de comblement (6) est/sont immobilisée(s) dans l'alésage (4) à l'aide de colle.
